## Europäisches Patentamt
## European Patent Office
## Office européen des brevets

(11) Veröffentlichungsnummer: **0 000 210**
B1

(12) **EUROPÄISCHE PATENTSCHRIFT**

(45) Veröffentlichungstag der Patentschrift:
05.05.82

(51) Int. Cl.³: **H 01 G 4/24,** H 01 G 1/01

(21) Anmeldenummer: **78200006.1**

(22) Anmeldetag: **01.06.78**

(54) **Selbstheilender elektrischer Kondensator.**

(30) Priorität: **02.07.77 DE 2730038**

(43) Veröffentlichungstag der Anmeldung:
**10.01.79 Patentblatt 79/1**

(45) Bekanntmachung des Hinweises auf die Patenterteilung:
**05.05.82 Patentblatt 82/18**

(84) Benannte Vertragsstaaten:
**CH DE FR GB NL SE**

(56) Entgegenhaltungen:
**US-A-3 763 409**

(73) Patentinhaber: **ROBERT BOSCH GMBH, Postfach 50, D-7000 Stuttgart 1 (DE)**

(72) Erfinder: **Förster, Herbert, Rosenstrasse 13, D-7064 Remshalden (DE)**

## Selbstheilender elektrischer Kondensator

Die Erfindung geht aus von einem selbstheilenden elektrischen Kondensator, insbesondere einem Wechselspannungskondensator, nach der Gattung des Hauptanspruches. Bei dünnen, auf die Oberflächen von Dielektrika als Kondensatorbeläge aufmetallisierten Aluminiumschichten mit Flächenwiderständen je quadratischer Einheit, im folgenden als Quadratwiderstand bezeichnet, von etwa 3 Ohm ab setzt bei mittleren elektrischen Feldstärken im Dielektrikum oberhalb einer bestimmten Grenze ein kreisförmiger, mit der Belastungsdauer fortschreitender Abbau der Aluminiumschichten ein, der aufgrund der Belagflächenverluste zu entsprechend fortschreitender Kapazitätsabnahme führt. Bei einer Polypropylen-Folie als Dielektrikum beginnt der Schichtabbau bei einer Frequenz von 50 Hz bei einer Effektivfeldstärke von ca. 40 V/μm.

Um diesen unerwünschten Kapazitätsverlust zu vermeiden, werden derzeit kleinere Feldstärken angewendet, als es das Dielektrikum ansonsten zulassen würde. Beispielsweise werden Leuchtstofflampen-Kondensatoren mit metallisierter Polypropylen-Folien als Dielektrikum für Nennspannungen von 220 bis 250 V/50 Hz mit bekannten Aluminium-Belagschichten aus 8 μm dicker Folie hergestellt, obgleich hierfür die Foliendicke von 6 μm bei hinreichend dünnen Aluminiumschichten mit einem Quadratwiderstand grösser 3,5 Ohm ausreichend wäre. Die sich ergebende Feldstärke ist jedoch zu hoch, weil zumindest durch die vorgeschriebenen elektrischen Prüfspannungen, beispielsweise 1,25 × Nennspannung oder höher, der genannte Schichtabbau auftritt. Dieser Schichtabbau verursacht also höhere Kosten für den Kondensator und grössere Volumen als an sich notwendig sind.

Es wird angestrebt, den zuvor erwähnten Schichtabbau bis zu den höchsten, für das jeweilige Dielektrikum zulässigen Feldstärken, zumindest aber bei erhöhten mittleren Feldstärken zu verhindern oder auf ein praktisch unbeachtliches Mass zu reduzieren. Darüber hinaus sollen betriebssichere einlagige Kondensatoren aus metallisierter Polypropylen oder Polycarbonat-Folie geschaffen werden für effektive Wechsel-Nennspannungen bis 320 V mit Foliendicken bis 6 μm, für 400 bis 500 V mit einer Foliendicke von 8 μm und für Spannungen über 500 V mit Foliendicken von 9 μm oder darüber.

### Vorteile der Erfindung

Der erfindungsgemässe selbstheilende elektrische Kondensator mit den kennzeichnenden Merkmalen des Hauptanspruches besitzt den Vorteil, dass der feldstärkeabhängige Schichtabbau nicht mehr auftritt. Der mittlere Gewichtsanteil von Kupfer in einer Aluminiumschicht soll dabei vorzugsweise zwischen 2 und 5% liegen. Kupferanteile unter etwa 0,5%, wie sie beispielsweise als Verunreinigungen bei der Herstellung der Schichtmetalle auftreten können, haben keinen Einfluss im erfindungsgemässen Sinne, bei Gewichtsanteilen über 10% ist zu erwarten, dass in flächenartigen Niederschlägen des zugesetzten Kupfers die gleichen Abbauerscheinungen auftreten können wie in der Aluminiumschicht.

Als vorteilhaft hat es sich erwiesen, wenn die Belagschicht des Kondensators im Aufdampfverfahren hergestellt wird, weil hierbei mit relativ geringen Kosten Schichten in der gewünschten Art mit hoher Gleichmässigkeit hergestellt werden können. Die Ausheileigenschaften des elektrischen Kondensators sind besonders günstig, wenn die Aluminium-Belagschicht eine mittlere Belegung kleiner als 10 μm Aluminium pro cm² der Belagfläche besitzt. Als untere Grenze empfiehlt sich etwa 4 μg/cm², um je nach Aufdampfbedingungen die Grösse des Belagwiderstands zu begrenzen.

### Beschreibung der Erfindung

Bei einem Ausführungsbeispiel wurde durch thermische Aufdampfung im Vakuum 6 μm dickes Polypropylen-Folienband einseitig mit einer Aluminiumschicht bedampft, die einen Gewichtsanteil von ca. 4% Kupfer enthielt und einen Quadratwiderstand von 5 bis 7 Ohm besass. Als Verdampfungsmaterial wurde ein Legierungsdraht verwendet mit einem Kupfer-Legierungsanteil, wobei die gesamte mittlere Flächenbelegung mit dem Verdampfungsmaterial ca 7 μg/cm² betrug. Aus einem Rollenpaar dieser Bänder wurden Wickelkondensatoren hergestellt. Unter sonst gleichen Bedingungen und gleichen Abmessungen wurden zum Vergleich mit der gleichen Polypropylenfolie Kondensatoren hergestellt, deren Beläge jedoch in bekannter Weise aus Aluminiumschichten mit Quadratwiderständen von 2,5 bis 3 Ohm bestanden. Verdampfungsmaterial war hierbei hochreiner Aluminiumdraht, die mittlere Flächenbelegung betrug ca. 9 μg/cm².

Nach einer Dauerspannungsprüfung der beiden Kondensatortypen über 350 Stunden bei der Temperatur 85° C und bei einer Prüfspannung von 412 V/50 Hz, einer mittleren Effektivstärke von ca. 70 V/μm, wurde bei den bekannten Belagschichten aus reinem Aluminium ein kreisförmiger Schichtabbau mit einem dadurch bedingten mittleren Kapazitätsverlust von ca. 7% festgestellt. Dieser Schichtabbau nimmt mit der Belastungsdauer zu. Die Kondensatoren mit den erfindungsgemässen Legierungsschichten als Belagschichten wiesen dagegen keinen feststellbaren Schichtabbau auf.

Die Herstellung der erfindungsgemässen Belagschichten kann mit bekannten physikalischen oder chemischen Metallisierungsverfahren erfolgen, sofern in der Belagschicht eine ausreichend homogene Verteilung der Kupfer-Beimengungen im erforderlichen Ausmass und die Fernhaltung von schädlichen Zusätzen gewährleistet ist. Beispielsweise kann es zweckmässig sein, die Schichten statt aus einem legierten Ausgangsmaterial aus zwei Ausgangsstoffen herzustellen, welche gegebenenfalls in zwei getrennten Tiegeln verdampft werden. Wenn unter gleichen Aufdampfbedingungen die Verdampfungsraten der verschiedenen Komponenten der Mehrstoffschicht unterschiedlich sind, müssen unter Umständen im Ausgangsstoff veränderte Legierungsbestandteile verwendet werden oder beim Verdampfen aus getrennten Tiegeln entsprechende Regelungsvorrichtungen vorgesehen werden.

Die neuen Kondensatorbelagschichten können auch bei dünnen Mehrfachschichten auf einen Kondensatordielektrikum angewendet werden; beispielsweise kann eine Aluminium-Legierungsschicht in Kombination mit einer aufmetallisierten Zn-Belagschicht als korrosionshemmende dünne Aluminiumschicht dienen, die infolge ihrer Oxidhaut gegen Umwelteinflüsse resistenter ist als eine Zn-Schicht.

Durch die erfindungsgemässe Belagschicht ist es möglich geworden, höhere Nennfeldstärken bei den Kondensatoren vorzusehen und somit die Kondensatoren kleiner und preiswerter herzustellen. Das Aufbringen der Belagschicht erfordert insbesondere beim Aufdampfen praktisch keinen Mehraufwand und bringt erhebliche technische und wirtschaftliche Vorteile. Zwischenschichten oder Mehrschichtsysteme, wie sie bereits vorgeschlagen worden sind, sind nicht erforderlich. Bei der Kombination beispielsweise mit einer Zinkschicht könnte man jedoch aufgrund der höheren Leitfähigkeit von Aluminium und aufgrund der Schutzwirkung der Aluminium-Oxidhaut erreichen, dass der gesamte Auftrag für die Belagschicht reduziert wird.

Der erfindungsgemässe Aufbau der Belagschicht hat weiterhin den Vorteil, dass elektrische Durchschläge im Dielektrikum, die durch betriebsmässige Überspannungsspitzen ausgelöst werden können, einwandfrei ausbrennen. Ferner sind höhere Prüfspannungen ohne Gefahr schlechter Ausbrände möglich, wodurch man bei Heraufsetzung der Prüfspannung mit einer kürzeren Prüfdauer auskommt. Schliesslich ist es auch vorteilhaft, dass infolge der geringeren Schichtdicke kürzere Aufdampfzeiten und eine geringere thermische Belastung des Schichtträgers erreicht werden.

Die erfindungsgemässen Belagschichten können sowohl bei imprägnierten wie bei nicht imprägnierten Kondensatoren vorteilhaft angewendet werden, denn auch bei imprägnierten Kondensatoren wird ab einer bestimmten mittleren Feldstärke ein Schichtabbau beobachtet. Beispielsweise bei Kondensatoren aus beidseitig metallisierten, feldfreien Papierbändern und Polycarbonat-Folien als Dielektrikum wird mit einer reinen Aluminiumschicht ein Schichtabbau bei einer mittleren Feldstärke von ca. 80 V/$\mu$m (50 Hz) beobachtet; bei Kondensatoren mit einem Mischdielektrikum aus 8 $\mu$m dickem metallisiertem Papierband und 6 $\mu$m Polypropylenfolie mit einem Quadratwiderstand der Aluminium-Schicht von ca. 15 $\Omega$ ist ein Schichtabbau feststellbar bei der Spannung 475 V/50 Hz.

Die Selbstheilfähigkeit von Kondensatoren wird umso besser, je weniger Material in der Schicht enthalten ist, weil beim Ausbrand die im Lichtbogen freigesetzte Energie dann umso geringer ist. Durch die erfindungsgemässe Belagschicht konnte bei der beschriebenen Aluminiumschicht die Belagmenge wesentlich reduziert werden; bei einem Aluminium-Belag ist dabei selbstverständlich stets ein Teil des Aluminiums gebunden, insbesondere als Oxid oder Hydroxid. Eine Belagschicht aus Aluminium besitzt dabei eine mittlere Belegung von 4 bis 10 $\mu$g Aluminium pro cm² der Belagfläche.

## Patentansprüche

1. Selbstheilender elektrischer Kondensator, insbesondere Wechselspannungskondensator, mit einem vorzugsweise aus Kunststoffolie bestehendem Dielektrikum und einer aufmetallisierten Belagschicht aus Aluminium, dadurch gekennzeichnet, dass die Belagschicht eine mittlere Al-Belegung von 4 bis 10 $\mu$g/cm² der Belagfläche besitzt und zur Vermeidung eines feldstärkeabhängigen Schichtabbaues einen mittleren, gleichmässig verteilten Gewichts-Anteil von 0,5 bis 10% Cu enthält.

2. Kondensator nach Anspruch 1, dadurch gekennzeichnet, dass die Belagschicht einen mittleren Gewichts-Anteil von 2 bis 5% enthält.

3. Kondensator nach Anspruch 1 oder 2, dadurch gekennzeichnet, dass die Belagschicht aufgedampft ist.

## Claims

1. A self-healing electric capacitor, especially an A. C. voltage capacitor, with a dielectric, preferably consisting of a plastics foil, and a cover layer applied by metallising of Al, characterised in that, the cover layer has an average Al covering of 4 to 10 $\mu$g/cm² of the cover area and includes a uniformly distributed average portion of 0.5 to 10% by weight of Cu for preveting a breakdown of the layer dependent on field strenght.

2. A capacitor according to claim 1, characterised in that, the cover layer includes an average portion of 2 to 5% by weight of Cu.

3. A capacitor according to claim 1 or 2, characterised in that, the cover layer is vapour deposited.

## Revendications

1. Condensateur électrique auto-générable, notamment condensateur pour tension alternative, avec un diélectrique constitué de préférence d'un film de matière plastique et une couche de revêtement métallisée en aluminium, condensateur caractérisé en ce que la couche de revêtement comporte un revêtement d'aluminium moyen de 4 à 10 $\mu$g/cm² de la surface de revêtement et contient une proportion moyenne de cuivre de 0,5 à 10% de poids, régulièrement réparti pour éviter une destruction de la couche du fait de champs intenses.

2. Condensateur selon la revendication 1, caractérisé en ce que la couche de revêtement comporte une proportion moyenne de cuivre de 2 à 5% en poids.

3. Condensateur selon l'une quelconque des revendications 1 et 2, caractérisé en ce que la couche de revêtement est déposée par vaporisation, comporte dans ce cas un revêtement moyen de 4 à 10 µg d'aluminium par cm² surface recouverte.